# FASCICULE DE BREVET EUROPEEN

(11) **EP 2 606 783 B1**
(45) Date de publication et mention de la délivrance du brevet: **21.05.2014**
(21) Numéro de dépôt: 12196579.2
(22) Date de dépôt: 11.12.2012
(51) Int. Cl.: A47J 31/44

(54) **Dispositif démontable pour réchauffer et émulsionner un liquide et machine équipée d'un tel dispositif**
Abnehmbare Vorrichtung zum Aufwärmen und Emulgieren einer Flüssigkeit, und mit einer solchen Vorrichtung ausgestattete Maschine
Removable device for reheating and emulsifying a liquid and machine provided with such a device

(30) Priorité: 22.12.2011 FR 1162345
(43) Date de publication de la demande: 26.06.2013
(73) Titulaire: SEB S.A., 69130 Ecully (FR)
(72) Inventeur: Giffard, Sylvain, 14610 Cambes-en-Plaine (FR); Claverie, Nicolas, 53960 Bonchamp-lès-Laval (FR)
(74) Mandataire: Bourrières, Patrice

(56) Documents cités:
- DE-A1-102005 010 601
- DE-U1- 8 806 220
- DE-U1- 29 502 594

## Description

La présente invention concerne le domaine technique de l'émulsification et du réchauffage de liquide tel que le lait au moyen de vapeur afin d'obtenir par exemple une mousse de lait chaud utilisée pour la préparation de boisson à base de café. Dans une application préférée, l'invention se rapporte à une buse à vapeur pour une machine de préparation de boisson chaude comme une machine à café de type « expresso ».

Il est connu un dispositif pour réchauffer et émulsionner un liquide comprenant un corps allongé tubulaire qui comprend une tête de raccordement à une source de vapeur. Le dispositif comprend un tube métallique placé à l'intérieur du corps allongé et maintenu dans le corps par un pied de diffusion vissé sur le corps. L'intérieur du tube définit un canal interne d'alimentation en vapeur reliant la tête de raccordement à un éjecteur d'une buse de mélange air/vapeur à effet venturi située dans le pied de diffusion. La paroi externe du tube définit avec le corps tubulaire une canalisation annulaire d'aspiration d'air raccordée, d'une part, à un orifice d'aspiration situé à proximité de la tête de raccordement et, d'autre part, à un orifice d'injection d'air de la buse de mélange du pied de diffusion.

Un tel dispositif est divulgué dans le document DE 10 2005 010601 et donne pleinement satisfaction en ce qui concerne sa fonction d'émulsification et de réchauffage mais présente l'inconvénient d'être constitué au moins de trois pièces différentes. De plus, son assemblage requiert un certain temps et un mauvais placement du tube métallique interne lors du montage est susceptible d'entrainer une rupture ou une déformation du tube.

Il est donc apparu le besoin d'un nouveau dispositif pour réchauffer et émulsionner un liquide qui présente un nombre moins important de pièces à assembler et qui ne présente pas de risque de détérioration accidentelle lors de son montage.

Afin d'atteindre cet objectif, l'invention concerne un dispositif pour réchauffer et émulsionner un liquide comprenant un corps allongé qui comprend :
- une tête de raccordement à une source de vapeur,
- un canal interne d'alimentation en vapeur reliant la tête de raccordement à un éjecteur d'une buse de mélange air/vapeur à effet venturi située à l'opposé de la tête,
- une canalisation interne d'aspiration d'air raccordée, d'une part, à un orifice d'aspiration situé à proximité de la tête de raccordement et, d'autre part, à un orifice d'injection d'air de la buse de mélange du pied de diffusion.

Selon l'invention, le corps comprend :
- un noyau tubulaire qui forme la tête de raccordement, le canal interne d'alimentation en vapeur et la buse de mélange et dont la paroi externe comprend au moins un évidement longitudinal qui s'étend entre, d'une part, un orifice d'aspiration de l'air situé à proximité de la tête de raccordement et, d'autre part, un orifice d'injection d'air de la buse de mélange,
- un fourreau externe tubulaire rigide, qui est démontable, qui entoure le noyau tubulaire et qui définit en coopération avec l'évidement longitudinal la canalisation d'aspiration,
- des moyens d'étanchéité entre le fourreau et la buse de mélange qui sont réalisés dans un matériau souple distinct du matériau rigide constitutif du fourreau.

Un tel mode de réalisation permet d'obtenir le dispositif pour réchauffer et émulsionner un liquide selon l'invention à partir de deux pièces qui sont simples à assembler l'une dans l'autre sans risque de détérioration. Ainsi, le noyau tubulaire peut être fabriqué par injection d'une matière plastique rigide résistant à la chaleur tandis que le fourreau externe peut, par exemple, être formé par un simple tube métallique qui est rapporté sur le noyau tubulaire. De plus, le caractère rigide du fourreau et souple des moyens d'étanchéité permet de faciliter les opérations de montage démontage. Ainsi, il est possible réaliser de manière simple et rapide un nettoyage efficace du dispositif pour réchauffer et émulsionner un liquide selon l'invention.

Selon une caractéristique de l'invention, le noyau tubulaire comprend deux évidements latéraux qui s'étendent chacun entre un orifice d'aspiration de l'air situé à proximité de la tête de raccordement et un orifice d'injection d'air de la buse de mélange. Cette caractéristique permet d'obtenir deux canalisations d'apport d'air de manière à obtenir une plus grande efficacité d'émulsification.

Selon une autre caractéristique de l'invention, chaque évidement est formé par un méplat longitudinal aménagé entre la tête de raccordement et la buse de mélange. Un tel mode de réalisation de l'évidement permet de simplifier la conception du moule utilisé lorsque que le noyau tubulaire est réalisé en matière plastique injectée.

Selon une variante de réalisation de l'invention, le noyau comprend à proximité de la tête de raccordement un épaulement périphérique d'appui pour le fourreau et la surface périphérique de la buse de mélange possède une forme complémentaire de celle de l'intérieur du fourreau.

Selon une variante de l'invention, le fourreau est emmanché sur le noyau. Un tel mode d'assemblage est particulièrement simple à mettre en oeuvre et ne requiert pas de forme complexe difficile à obtenir dans le cadre d'une fabrication par injection de matière plastique.

Il doit être remarqué qu'en plus de limiter les remontées de liquide dans les canalisations d'apport d'air, les moyens d'étanchéité peuvent être mis à profit pour contribuer au maintien du fourreau sur le noyau par les forces de frottement induites par les moyens d'étanchéité. Selon l'invention les moyens d'étanchéité peuvent être réalisés de toute manière appropriée.

Selon une caractéristique de l'invention, les moyens d'étanchéité comprennent un joint torique solidaire de la buse de mélange.

Selon une autre caractéristique de l'invention, les moyens d'étanchéité comprennent une garniture rapportée sur le fourreau ou sur la buse de mélange. Une telle garniture d'étanchéité peut alors être montée en force sur l'élément qui la porte ou au contraire surmoulée sur ce dernier.

Selon une variante de cette caractéristique la garniture surmoulée comprend au moins deux lèvres d'étanchéité. Cette variante de réalisation permet d'obtenir une bonne étanchéité avec des lèvres souples n'offrant pas trop de résistance à la mise en place et au retrait du fourreau.

Selon une forme de réalisation de l'invention, la tête de raccordement comprend des moyens de fixation réversibles destinés à coopérer avec des moyens de fixation complémentaires d'un élément de raccordement porté par une canule raccordée à une source de vapeur. La mise en oeuvre de tels moyens de fixation réversibles ou démontables permet de désolidariser facilement le dispositif selon l'invention de la source de vapeur, de manière par exemple, à pouvoir en nettoyer les éléments constitutifs sous l'eau d'un robinet.

Selon une variante de cette forme de réalisation, les moyens de fixation sont du type à baïonnette.

L'invention concerne également une machine pour la préparation de boissons chaudes comprenant une canule qui est raccordée à une source de vapeur et qui comprend un dispositif pour réchauffer et émulsionner un liquide selon l'invention dont la tête de raccordement est adaptée sur un élément de raccordement complémentaire porté par la canule.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

Par ailleurs, diverses autres caractéristiques de l'invention ressortent de la description annexée effectuée en référence aux dessins qui illustrent des formes non limitatives de réalisation d'un dispositif pour réchauffer et émulsionner un liquide et d'une machine équipée d'un tel dispositif, conformes à l'invention.
- La figure 1 est une vue schématique d'une machine de préparation de boissons chaudes équipée d'un dispositif amovible pour réchauffer et émulsionner un liquide selon l'invention.
- Les figures 2 et 3 sont des coupes longitudinales montrant deux éléments constitutifs du dispositif illustré à la figure 1.
- La figure 4 est une coupe longitudinale du dispositif pour réchauffer et émulsionner un liquide, selon l'invention, résultant de l'assemblage des éléments illustrés aux figures 2 et 3.
- La figure 5 est une perspective schématique montrant une étape de montage du dispositif pour réchauffer et émulsionner un liquide selon l'invention.
- Les figures 6 à 8 sont des coupes analogues à la figure 4 montrant des variantes de réalisation du dispositif pour réchauffer et émulsionner un liquide selon l'invention.
Il est à noter que sur ces figures les éléments structurels et/ou fonctionnels communs aux différentes variantes peuvent présenter les mêmes références.

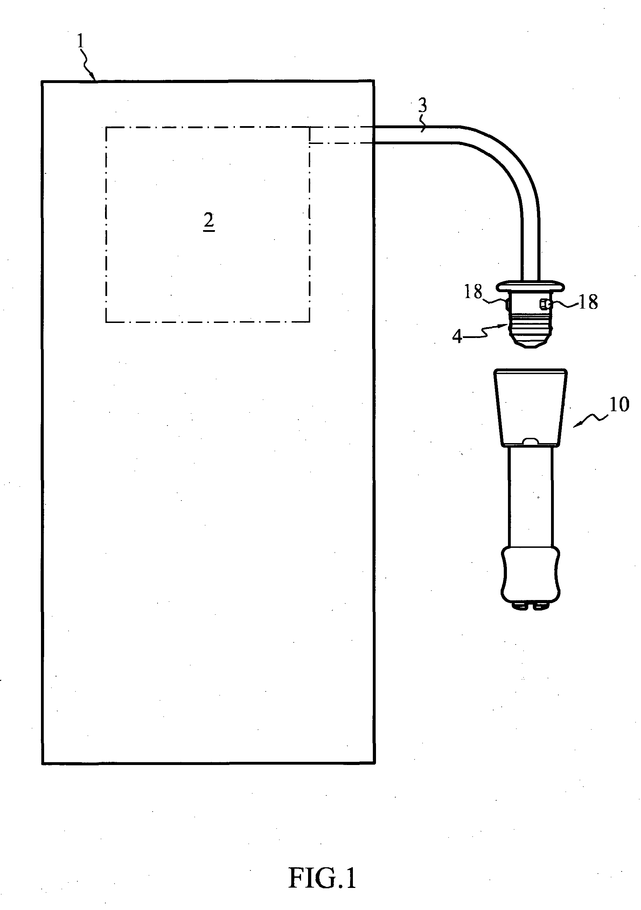

Une machine pour la préparation de boissons chaudes selon l'invention, telle que par exemple mais non exclusivement une machine à café de type « expresso », comprend, comme le montre la figure 1, un bâti 1 renfermant une source de vapeur 2 comme une chaudière électrique associée à une pompe haute pression et à un réservoir d'eau non visibles sur la figure 1. La source de vapeur 2 est raccordée à une canule 3 qui s'étend à l'extérieur du bâti 1 et dont l'extrémité est équipée d'un élément 4 de raccordement d'un dispositif 10 pour réchauffer et émulsionner un liquide. Selon l'exemple illustré, le dispositif 10 est adapté de manière amovible sur l'élément de raccordement 4.

Une fois adapté sur cet élément de raccordement 4, le dispositif 10 est destiné à assurer l'injection de vapeur mélangée à de l'air dans le liquide à réchauffer et à émulsionner. Ainsi dans le cadre de la préparation d'une boisson chaude à base de lait, le dispositif 10 pourra être utilisé pour préparer une mousse de lait chaud à partir de lait froid.

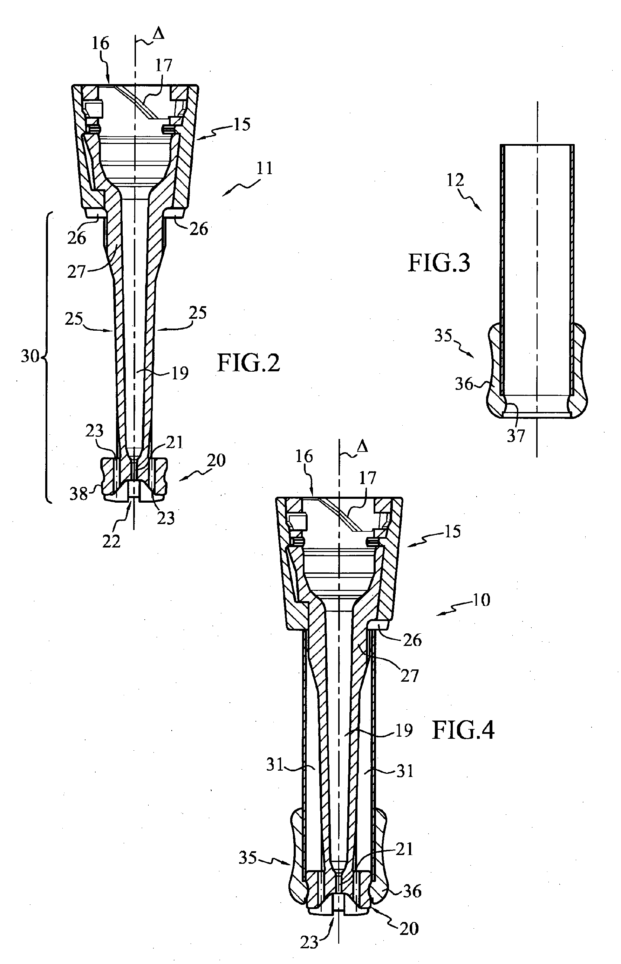

Selon l'invention, le dispositif 10 comprend un noyau tubulaire allongé 11 plus particulièrement illustré à la figure 2. Le noyau 11 est associé à un fourreau 12, illustré à la figure 3, pour former, après assemblage, le dispositif 10 tel que représenté à la figure 4.

Le noyau tubulaire allongé 11 forme une tête de raccordement 15 qui définit une chambre 16 d'une forme complémentaire à celle de l'élément de raccordement 4. Selon l'exemple illustré, la tête de raccordement 15 forme une partie femelle tandis que l'élément de raccordement 4 forme une partie mâle d'un raccord démontable étanche à la vapeur d'eau. Dans le cas présent, le verrouillage de ce raccord démontable est assuré par vissage et la chambre 16 comprend, en tant que moyens de fixation réversibles, deux portées hélicoïdales 17, une seule étant visible aux figures 2 et 4. Les portées hélicoïdales 17 sont destinées à coopérer avec deux ergots 18 en saillie de l'élément de raccordement 4. Les deux ergots 18 forment alors des moyens de fixation complémentaires aux moyens de fixation formés par les portées 17.

Le noyau tubulaire allongé 11 comprend un canal interne 19 d'alimentation en vapeur d'une buse 20 aménagée à l'extrémité opposée à la tête 15 du noyau tubulaire 11. Le canal interne 19 s'ouvre dans la chambre 16 de la tête de raccordement 15 et débouche, via un éjecteur 21, dans une chambre de mélange 22 de la buse 20. La chambre 22 est ouverte à l'opposé de la chambre 16. La buse 20 est conçue pour effectuer un mélange air vapeur par effet venturi. Afin d'assurer l'apport d'air, la buse 20 comprend au moins un et, selon l'exemple illustré, deux orifices d'injection d'air 23 qui débouchent dans la chambre de mélange 22. Les deux orifices d'injection d'air 23 débouchent, par ailleurs, chacun au niveau d'un évidement longitudinal 25 aménagé dans le corps tubulaire 11. Les deux évidements longitudinaux 25 sont, dans le cas présent, aménagés à l'opposé l'un de l'autre par rapport à un axe longitudinal médian Δ du noyau 11. Chaque évidement longitudinal 25 est ouvert à l'opposé du canal d'alimentation 19 en vapeur et se trouve, selon l'exemple illustré, définit par un méplat qui s'étend entre l'orifice d'injection d'air 23 correspondant et un orifice d'aspiration d'air 26 situé à proximité de la tête de raccordement 15. Selon l'exemple illustré, chaque orifice d'aspiration 26 est définit par une rainure aménagée dans un épaulement périphérique d'appui 27 pour le fourreau 12 tubulaire externe.

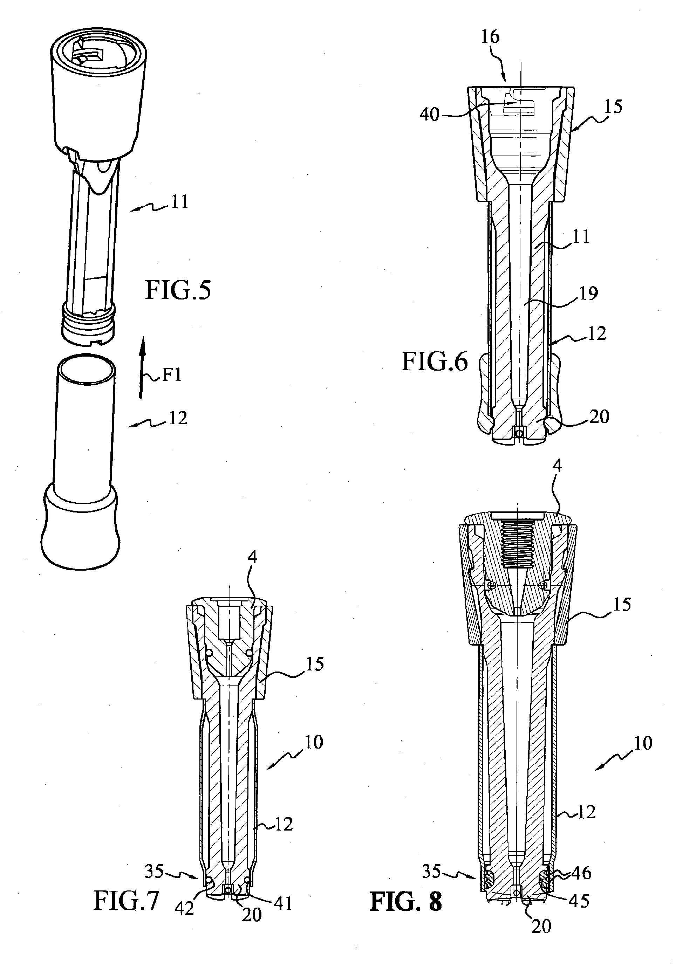

Le fourreau 12 tubulaire externe est destiné à être adapté sur le noyau 11 par un mouvement d'emmanchement en translation dans le sens de la flèche F1 comme le montre la figure 5. Le volume intérieur du fourreau 12 présente donc une forme complémentaire d'une partie 30 du noyau 11 qui reçoit ledit fourreau 12. Selon l'exemple illustré le fourreau 12 présente une forme sensiblement cylindrique de révolution. Lorsqu'il est engagé sur le noyau 11, le fourreau 12 vient en appui sur l'épaulement périphérique 27 et épouse la forme de la buse 20 de mélange. Le fourreau 12 définit alors avec chaque évidement 25 une canalisation d'aspiration d'air 31 qui est raccordée, d'une part, à l'orifice d'aspiration d'air 26 correspondant et, d'autre part, à l'orifice d'injection d'air 23 correspondant.

Selon l'exemple illustré, le dispositif 10 comprend des moyens d'étanchéité 35 entre le fourreau 12 et la buse 20 de mélange. Selon l'exemple illustré, les moyens d'étanchéité 35 sont formés par une garniture 36 qui est surmoulée sur le fourreau 12 et qui définit une lèvre d'étanchéité périphérique 37 orientée vers l'intérieur du fourreau et destinée à coopérer avec une rainure périphérique 38 de la buse 20 de mélange. En plus d'éviter les remontées de liquide par l'extérieur de la buse 20 de mélange, les moyens d'étanchéité 35 contribuent à la tenue par frottements du fourreau 12 sur le noyau tubulaire 11.

Il apparaît donc que l'invention permet d'obtenir le dispositif 10 pour le réchauffage et l'émulsification d'un liquide avec seulement deux pièces indépendantes qui sont particulièrement simples à assembler et à désassembler, sans nécessité d'outillage de la part de l'utilisateur.

Selon l'exemple décrit précédemment en relation avec les figures 1 à 4, les moyens de fixation réversibles de la tête de raccordement sont formés par des portées hélicoïdales 17 de manière à permettre une fixation réversible par vissage. Toutefois, les moyens de fixation réversibles peuvent être réalisés différemment. Ainsi la figure 6, montre un autre mode de réalisation des moyens de fixation réversible sous la forme de deux encoches 40 en « L » d'un système de fixation à baïonnette.

Selon l'exemple décrit en relation avec les figures 2 à 4, les moyens d'étanchéité 35 sont réalisés sous la forme d'une garniture 36 surmoulée sur le fourreau 12. Toutefois, les moyens d'étanchéité 35 pourraient être réalisés différemment. Ainsi, la figure 7, illustre une variante de l'invention selon laquelle les moyens d'étanchéité 35 comprennent un joint torique 41 disposé dans une gorge périphérique 42 de la buse 20 de mélange de manière à être solidaire de cette dernière.

Selon une autre forme de réalisation illustrée figure 8, les moyens d'étanchéité 35 comprennent une garniture 45 surmoulée sur la buse 20 de mélange. La garniture 45 comprend alors deux lèvres d'étanchéité 46 périphériques qui présentent une souplesse adaptée pour ne pas offrir trop de résistance au montage du fourreau 12 tout en assurant une étanchéité satisfaisante.

Bien entendu, diverses autres modifications peuvent être apportées à l'invention dans le cadre des revendications annexées.

## Revendications

1. Dispositif pour réchauffer et émulsionner un liquide comprenant un corps allongé qui comprend :
- une tête de raccordement (15) à une source de vapeur,
- un canal interne (19) d'alimentation en vapeur reliant la tête de raccordement (15) à un éjecteur d'une buse (20) de mélange air/vapeur à effet venturi située à l'opposé de la tête,
- une canalisation interne (31) d'aspiration d'air raccordée, d'une part, à un orifice d'aspiration (26) situé à proximité de la tête de raccordement (15) et, d'autre part, à un orifice d'injection (23) d'air de la buse (20) de mélange,
**caractérisé en ce que** le corps comprend :
- un noyau tubulaire (11) qui forme la tête de raccordement (15), le canal interne (19) d'alimentation en vapeur et la buse (20) de mélange et dont la paroi externe comprend au moins un évidement longitudinal (25) qui s'étend entre un orifice d'aspiration (26) de l'air situé à proximité de la tête de raccordement (15) et un orifice d'injection (23) d'air de buse (20) de mélange,
- un fourreau externe (12) tubulaire rigide, qui est démontable du noyau tubulaire (11), qui entoure le noyau tubulaire (11) et qui définit en coopération avec l'évidement longitudinal (25) la canalisation d'aspiration (31)
- des moyens d'étanchéité (35) entre le fourreau (12) et la buse (20) de mélange qui sont réalisés dans un matériau souple distinct du matériau rigide constitutif du fourreau pour permettre de faciliter les opérations de montage/démontage du fourreau externe (12).

2. Dispositif pour réchauffer et émulsionner un liquide selon la revendication 1, **caractérisé en ce que** le noyau tubulaire (11) comprend deux évidements latéraux (25) qui s'étendent chacun entre un orifice d'aspiration (26) de l'air situé à proximité de la tête de raccordement (15) et un orifice d'injection (23) d'air de la buse (20) de mélange.

3. Dispositif pour réchauffer et émulsionner un liquide selon la revendication 1 ou 2, **caractérisé en ce que** chaque évidement (25) est formé par un méplat longitudinal aménagé entre la tête de raccordement (15) et la buse (20) de mélange.

4. Dispositif pour réchauffer et émulsionner un liquide selon l'une des revendications 1 à 3, **caractérisé en ce que** le noyau (11) comprend à proximité de la tête de raccordement (15) un épaulement périphérique (27) d'appui pour le fourreau (12) et **en ce que** la surface périphérique de la buse (20) de mélange possède une forme complémentaire de celle de l'intérieur du fourreau (12).

5. Dispositif pour réchauffer et émulsionner un liquide selon l'une des revendications 1 à 4, **caractérisé en ce que** le fourreau (12) est emmanché sur le noyau (11).

6. Dispositif pour réchauffer et émulsionner un liquide selon l'une des revendications 1 à 5, **caractérisé en ce que** les moyens d'étanchéité (35) comprennent un joint torique (42) solidaire de la buse (20) de mélange.

7. Dispositif pour réchauffer et émulsionner un liquide selon l'une des revendications 1 à 5, **caractérisé en ce que** les moyens d'étanchéité (35) comprennent une garniture (36, 45) rapportée sur le fourreau (12) ou sur la buse (20) de mélange.

8. Dispositif pour réchauffer et émulsionner un liquide selon la revendication 7, **caractérisé en ce que** la garniture (45) est surmoulée sur le fourreau (12) ou sur la buse (20) de mélange.

9. Dispositif pour réchauffer et émulsionner un liquide selon la revendication 7 ou 8, **caractérisé en ce que** la garniture (45) rapportée comprend au moins deux lèvres d'étanchéité (46).

10. Dispositif pour réchauffer et émulsionner un liquide selon l'une des revendications 1 à 9, **caractérisé en ce que** la tête de raccordement (15) comprend des moyens de fixation (40) réversibles destinés à coopérer avec des moyens de fixation complémentaires (18) d'un élément de raccordement (4) porté par une canule (3) raccordée à une source de vapeur (2).

11. Dispositif pour réchauffer et émulsionner un liquide selon la revendication 10, **caractérisé en ce que** les moyens de fixation (40) sont du type à baïonnette.

12. Machine pour la préparation de boissons chaudes comprenant une canule (3) qui est raccordée à une source de vapeur (2) et qui comprend un dispositif (10) pour réchauffer et émulsionner un liquide selon l'une des revendications 1 à 11 dont la tête de raccordement (15) est adaptée sur un élément de raccordement complémentaire (4) porté par la canule (3).

## Patentansprüche

1. Vorrichtung zum Erwärmen und Emulgieren einer Flüssigkeit mit einem länglichen Körper, der Folgendes aufweist:
- einen Anschlusskopf (15) zum Anschluss an eine Dampfquelle,
- einen innenliegenden Kanal (19) für die Dampfzufuhr, der den Anschlusskopf (15) mit einem Ejektor einer dem Kopf gegenüber angeordneten Luft-/Dampf-Mischdüse (20) mit Venturi-Effekt verbindet,
- eine innenliegende Luftansaugleitung (31), die an einem Ende an eine Ansaugöffnung (26) angeschlossen ist, die in der Nähe des Anschlusskopfes (15) angeordnet ist, und am anderen Ende an eine Lufteinlassöffnung (23) der Mischdüse (20),
**dadurch gekennzeichnet, dass** der Körper Folgendes aufweist:
- einen rohrförmigen Kern (11), der den Anschlusskopf (15), den innenliegenden Kanal (19) für die Dampfzufuhr und die Mischdüse (20) umfasst, und dessen Außenwand mindestens eine längliche Aussparung (25) umfasst, die von einer Luftansaugöffnung (26) in der Nähe des Anschlusskopfes (15) bis zu einer Lufteinlassöffnung (23) der Mischdüse (20) verläuft,
- eine als starres Rohr ausgeführte äußere Hülse (12), die vom rohrförmigen Kern (11) trennbar ist, die den rohrförmigen Kern (11) umschließt und die gemeinsam mit der länglichen Aussparung (25) die Ansaugleitung (31) definiert,
- Abdichtungsmittel (35) zwischen der Hülse (12) und der Mischdüse (20) aus einem weichen Material, das sich von dem starren Material unterscheidet, aus dem die Hülse besteht, um so den Einbau/Ausbau der äußeren Hülse (12) zu erleichtern.

2. Vorrichtung zum Erwärmen und Emulgieren einer Flüssigkeit nach Anspruch 1, **dadurch gekennzeichnet, dass** der rohrförmige Kern (11) zwei seitliche Aussparungen (25) umfasst, die jeweils von einer Luftansaugöffnung (26) in der Nähe des Anschlusskopfes (15) zu einer Lufteinlassöffnung (23) der Mischdüse (20) verlaufen.

3. Vorrichtung zum Erwärmen und Emulgieren einer Flüssigkeit nach Anspruch 1 oder 2, **dadurch gekennzeichnet, dass** jede Aussparung (25) aus einer längslaufenden Abflachung zwischen dem Anschlusskopf (15) und der Mischdüse (20) besteht.

4. Vorrichtung zum Erwärmen und Emulgieren einer Flüssigkeit nach einem der Ansprüche 1 bis 3, **dadurch gekennzeichnet, dass** der Kern (11) in der Nähe des Anschlusskopfes (15) eine umlaufende Ausbuchtung (27) zur Stützung der Hülse (12) aufweist und dass die Umfangsfläche der Mischdüse (20) eine zum Inneren der Hülse (12) komplementäre Form aufweist.

5. Vorrichtung zum Erwärmen und Emulgieren einer Flüssigkeit nach einem der Ansprüche 1 bis 4, **dadurch gekennzeichnet, dass** die Hülse (12) auf den Kern (11) aufgeschoben ist.

6. Vorrichtung zum Erwärmen und Emulgieren einer Flüssigkeit nach einem der Ansprüche 1 bis 5, **dadurch gekennzeichnet, dass** die Abdichtungsmittel (35) einen Dichtungsring (42) aufweisen, der fest mit der Mischdüse (20) verbunden ist.

7. Vorrichtung zum Erwärmen und Emulgieren einer Flüssigkeit nach einem der Ansprüche 1 bis 5, **dadurch gekennzeichnet, dass** die Abdichtungsmittel (35) eine Verkleidung (36, 45) aufweisen, die sich an die Hülse (12) oder die Mischdüse (20) anschließt.

8. Vorrichtung zum Erwärmen und Emulgieren einer Flüssigkeit nach Anspruch 7, **dadurch gekennzeichnet, dass** die Verkleidung (45) um die Hülse (12) oder die Mischdüse (20) herum ausgebildet ist.

9. Vorrichtung zum Erwärmen und Emulgieren einer Flüssigkeit nach Anspruch 7 oder 8, **dadurch gekennzeichnet, dass** die Verkleidung (45) mindestens zwei Dichtlippen (46) aufweist.

10. Vorrichtung zum Erwärmen und Emulgieren einer Flüssigkeit nach einem der Ansprüche 1 bis 9, **dadurch gekennzeichnet, dass** der Anschlusskopf (15) umkehrbare Befestigungsmittel (40) aufweist, die dazu vorgesehen sind, mit den komplementären Befestigungsmitteln (18) eines Anschlusselements (4) zusammenzuwirken, das von einer an eine Dampfquelle (2) angeschlossenen Kanüle (3) getragen wird.

11. Vorrichtung zum Erwärmen und Emulgieren einer Flüssigkeit nach Anspruch 10, **dadurch gekennzeichnet, dass** die Befestigungsmittel (40) bajonettartig ausgeführt sind.

12. Maschine zur Zubereitung von Heißgetränken, bestehend aus einer Kanüle (3), die an eine Dampfquelle (2) angeschlossen ist und die eine Vorrichtung (10) zum Erwärmen und Emulgieren einer Flüssigkeit nach einem der Ansprüche 1 bis 11 aufweist, deren Anschlusskopf (15) auf ein komplementäres Anschlusselement (4) passt, das auf der Kanüle (3) sitzt.

## Claims

1. Device for heating and emulsifying a liquid, comprising an elongated body which includes:
- a connection head (15) for connection to a steam source,
- an internal steam supply channel (19) linking the connection head (15) to an ejector of a venturi effect steam/air mixing nozzle (20) located opposite the head,
- an inner air suction pipe (31) connected, firstly, to a suction port (26) located close to the connection head (15) and, secondly, to an air injection port (23) of the mixing nozzle (20),
**characterised in that** the body comprises:
- a tubular core (11) forming the connection head (15), the inner steam supply channel (19) and the mixing nozzle (20) and whose outer wall includes at least one longitudinal recess (25) which extends between an air suction port (26) close to the connection head (15) and an air injection port (23) of the mixing nozzle (20),
- a rigid outer tubular sleeve (12), which is removable from the tubular core (11) which surrounds the tubular core (11) and which defines the suction pipe (31) in cooperation with the longitudinal recess (25),
- sealing means (35) between the sleeve (12) and the mixing nozzle (20) which are made from a flexible material different from the rigid material of the sleeve to facilitate the outer sleeve (12) assembly/disassembly operations.

2. Device for heating and emulsifying a liquid according to claim 1, **characterised in that** the tubular core (11) comprises two lateral recesses (25) each extending between an air suction port (26) located close to the connection head (15) and an air injection port (23) of the mixing nozzle (20).

3. Device for heating and emulsifying a liquid according to claim 1 or 2, **characterised in that** each recess (25) consists of a longitudinal flat formed between the connection head (15) and the mixing nozzle (20).

4. Device for heating and emulsifying a liquid according to one of claims 1 to 3, **characterised in that** the core (11) comprises close to the connection head (15) a peripheral support shoulder (27) for the sleeve (12) and **in that** the peripheral surface of the mixing nozzle (20) has a shape complementary to that of the inside of the sleeve (12).

5. Device for heating and emulsifying a liquid according to one of claims 1 to 4, **characterised in that** the sleeve (12) is pushed onto the core (11).

6. Device for heating and emulsifying a liquid according to one of claims 1 to 5, **characterised in that** the sealing means (35) comprise an O-ring (42) integral with the mixing nozzle (20).

7. Device for heating and emulsifying a liquid according to one of claims 1 to 5, **characterised in that** the sealing means (35) comprise packing (36, 45) added on the sleeve (12) or the mixing nozzle (20).

8. Device for heating and emulsifying a liquid according to claim 7, **characterised in that** the packing (45) is overmoulded onto the sleeve (12) or the mixing nozzle (20).

9. Device for heating and emulsifying a liquid according to claim 7 or 8, **characterised in that** the added packing (45) comprises at least two sealing lips (46).

10. Device for heating and emulsifying a liquid according to one of claims 1 to 9, **characterised in that** the connection head (15) comprises reversible fastening means (40) intended to cooperate with complementary fastening means (18) of a connecting member (4) carried by a cannula (3) connected to a steam source (2).

11. Device for heating and emulsifying a liquid according to claim 10, **characterised in that** the fastening means (40) are of the bayonet type.

12. Machine for preparing hot beverages comprising a cannula (3) which is connected to a steam source (2) and which comprises a device (10) for heating and emulsifying a liquid according to one of claims 1 to 11 whose connection head (15) is adapted on a complementary connection element (4) carried by the cannula (3).
